# EUROPEAN PATENT APPLICATION

(11) **EP 4 506 436 A1**
(43) Date of publication of application: **12.02.2025**
(21) Application number: 22936627.3
(22) Date of filing: 13.05.2022
(51) Int. Cl.: C09K 11/70, C09K 11/54, C09K 11/88, C09K 11/02

(54) **QUANTUM DOT PREPARING METHOD**

(30) Priority: 07.04.2022 KR 20220043614
(71) Applicant: DCT Co., Ltd., Gyeongsangbuk-do 39817 (KR)
(72) Inventor: CHUNG, Han Il, Daegu 42605 (KR); KIM, Hae Sik, Daegu 41408 (KR); KIM, Do Eok, Daegu 41460 (KR); YU, Jeong Hwan, Daegu 41437 (KR); LEE, Jae Wook, Daegu 41456 (KR)
(74) Representative: Müller Schupfner & Partner Patent- und Rechtsanwaltspartnerschaft mbB (Muc)
(86) International application number: PCT/KR2022/006917
(87) International publication number: WO 2023/195574

(57) **Abstract**

A quantum dot preparing method according to an embodiment of the present invention comprises the steps of: preparing a first solution containing at least one first cation precursor and a second solution containing at least one first anion precursor; mixing the first solution and the second solution at 20°C to 130°C to prepare a first mixture; raising the temperature of the first mixture to a high temperature of 300°C within 1 minute; and cooling the first mixture, of which the temperature is raised, to 100°C or lower within 1 minute, thereby forming a core, wherein the first cation precursor includes an indium oxo cluster (In-Oxocluster).

## Description

### [Technical Field]

The present invention relates to a quantum dot preparing method and a quantum dot prepared thereby, and more particularly, to a quantum dot preparing method capable of obtaining quantum dots having a reduced reaction time, easy mass production, high quantum efficiency, and improved optical and thermal stability.

### [Background Art]

Quantum dots are semiconductor materials with a nano-sized crystal structure, and are material with high color purity, excellent photostability and thermal stability compared to organic materials, and ease of band gap control. Since these quantum dots have a large surface area per unit volume due to a small size and exhibit a quantum confinement effect, the quantum dots have physicochemical properties that are different from those of the semiconductor material itself. The quantum dots absorb light from an excitation source, enter an energy excited state, and emit energy corresponding to the energy band gap of the quantum dots. Since the quantum dots have luminescent properties capable of controlling the energy band gap by controlling the size and composition of the nanocrystals and having high color purity, the quantum dots have been developed for various applications, such as display devices, energy devices, or bioluminescent devices.

When the quantum dots are applied to devices, efficiency is reduced due to corrosion and oxidation of the quantum dots by high frequency, heat, moisture, etc., and for this reason, conventional quantum dots that are generally mentioned are mainly utilized in a core-shell structure in which a shell is coated on the surface of a core. As such, when the shell is coated on the surface of the core, there are advantages of improving a phenomenon in which quantum dots are corroded by heat or moisture, and increasing optical durability by acting as an energy barrier that confines charges formed by applying light.

In general, a method for preparing a quantum dot with a core-shell structure uses a method of primarily synthesizing a core by injecting an anion precursor solution into a high-temperature cation precursor solution at a high temperature, and then secondarily forming a shell by injecting a solution constituting a shell component. At this time, depending on the number of additions of the solution constituting the shell component, quantum dots having a core-shell or multi-shell structure may be prepared.

However, the quantum dot preparing method described above has disadvantages of being complicated in synthesis method and increasing synthesis time due to a series of processes of preparing each precursor solution and synthesizing a plurality of solutions in steps. In addition, quantum dots with a core-shell structure may generally control the emission wavelength by adjusting the particle size of the core, but it was difficult to control the emission wavelength because the reaction speed for synthesizing the core was very fast. In addition, there was a problem that the thermal stability and quantum efficiency of the quantum dots were reduced when lattice mismatch occurred between the core and the shell during the process of forming the core-shell structure through multiple steps.

### [Disclosure]

### [Technical Problem]

An object of the present invention is to provide a quantum dot preparing method capable of being easily mass-produced in a short period of time.

Another object of the present invention is to provide a quantum dot preparing method capable of implementing high quantum efficiency by having a narrow full width at half maximum.

Yet another object of the present invention is to provide a quantum dot preparing method having excellent photostability and thermal stability.

Still another object of the present invention is to provide a quantum dot preparing method capable of variously adjusting an emission wavelength by easily controlling a reaction.

The objects of the present invention are not limited to the aforementioned objects, and other objects, which are not mentioned above, will be apparent to those skilled in the art from the following description.

### [Technical Solution]

An aspect of the present invention provides a quantum dot preparing method including: preparing a first solution containing at least one first cation precursor and a second solution containing at least one first anion precursor; mixing the first solution and the second solution at 20°C to 130°C to prepare a first mixture; raising the temperature of the first mixture to a high temperature of 300°C within 1 minute; and cooling the first mixture, of which the temperature is raised, to 100°C or lower within 1 minute to form a core, in which the first cation precursor includes an indium oxo cluster (In-Oxocluster).

Details of other embodiments will be included in the detailed description of the invention and the accompanying drawings.

### [Advantageous Effects]

According to the preparing method of the present invention, it is possible to obtain quantum dots capable of implementing high quantum efficiency by having a narrow full width at half maximum.

According to the preparing method of the present invention, it is possible to obtain quantum dots having excellent photostability and thermal stability by using a synthesis technique using high-temperature heat treatment.

According to the preparing method of the present invention, the core is used without centrifugation, and the reaction time is short, and thus mass production can be achieved in a short period of time using a small-scale continuous production method.

According to the preparing method of the present invention, since the reaction may be easily controlled and the emission wavelength may be adjusted in various ways, there is an effect of minimizing a defect rate.

The effects according to the present invention are not limited by the contents exemplified above, and more various effects are included in the present specification.

### [Description of Drawings]

FIG. 1 is a flowchart schematically illustrating a core formation process in a quantum dot preparing method according to an embodiment of the present invention.
FIG. 2 is a flowchart schematically illustrating a shell formation process in a quantum dot preparing method according to an embodiment of the present invention.
FIG. 3 is a schematic diagram for describing a quantum dot preparing method according to an embodiment of the present invention.
FIG. 4 is a schematic diagram for describing a quantum dot preparing method according to an embodiment of the present invention.

### [Modes of the Invention]

Advantages and features of the present invention, and methods for accomplishing the same will be more clearly understood from embodiments to be described below in detail with reference to the accompanying drawings. However, the present invention is not limited to the following embodiments but may be implemented in various different forms. The embodiments are provided only to complete disclosure of the present invention and to fully provide a person having ordinary skill in the art to which the present invention pertains with the category of the invention.

The shapes, sizes, ratios, angles, numbers, and the like illustrated in the drawings for describing the embodiments of the present invention are merely examples, and the present invention is not limited thereto. Throughout this specification, like reference numerals denote like components. Further, in describing the present invention, a detailed explanation of known related technologies will be omitted when it is determined to unnecessarily obscure the subject matter of the present invention. The terms such as "including", "having", and "consisting of" used herein are generally intended to allow other components to be added unless the terms are used with the term "only". When a component is expressed in a singular form, the singular form may include a plural form unless expressly stated otherwise.

Components are interpreted to include an ordinary error range even if not expressly stated.

When the position relation between two parts is described using the terms such as "on", "above", "below", and "next", one or more other parts may be positioned between the two parts unless the terms are used with the term "immediately" or "directly".

When an element or layer is referred to as being "on" another element or layer, it may be directly on the other element or layer, or intervening elements or layers may be present.

Although the terms "first", "second", and the like are used for describing various components, these components are not confined by these terms. These terms are merely used for distinguishing one element or component from another element or component. Therefore, a first component to be mentioned below may be a second component in a technical concept of the present invention.

Throughout this specification, like reference numerals denote like components.

Since size and thickness of each component illustrated in the drawings are represented for convenience in explanation, the present invention is not necessarily limited to the illustrated size and thickness of each component.

The features of various embodiments of the present invention may be partially or entirely coupled to or combined with each other and may be interlocked and operated in technically various ways, and the embodiments may be carried out independently of or in association with each other.

Hereinafter, the present invention will be described with reference to the drawings.

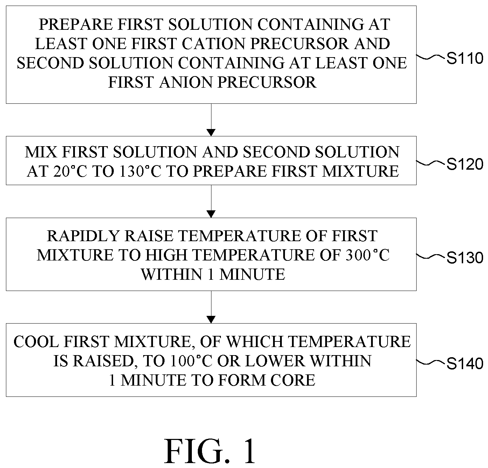

FIG. 1 is a flowchart schematically illustrating a core formation process in a quantum dot preparing method according to an embodiment of the present invention.

Referring to FIG. 1, a quantum dot preparing method according to an embodiment of the present invention includes preparing a first solution containing at least one first cation precursor and a second solution containing at least one first anion precursor (S110); mixing the first solution and the second solution at 20°C to 130°C to prepare a first mixture (S120); raising the temperature of the first mixture to a high temperature of 300°C within 1 minute (S130); and cooling the first mixture, of which the temperature is raised, to 100°C or lower within 1 minute (S140) to form a core, in which the first cation precursor includes an indium oxo cluster (In-Oxocluster).

Hereinafter, a quantum dot preparing method of the present invention will be described in detail step by step.

First, a first solution containing at least one first cation precursor and a second solution containing at least one first anion precursor is prepared (S110).

At this time, at least one of the first solution and the second solution may include two or more precursors. For example, the first solution may include two types of cation precursors, and the second solution may also include two types of anion precursors but are not limited thereto.

The first cation precursor includes an indium oxo cluster (In-Oxocluster). A cluster structure refers to a structure in which three or more atoms of the same or similar elements are combined to form a single mass, and an active metal oxide such as an indium oxo cluster (In-Oxo) may be synthesized by reacting an active metal precursor with a carboxylic acid. Specifically, the indium oxo cluster (In-Oxo) may be formed by a reaction of an active metal precursor such as indium (III) acetate and carboxylate such as oleic acid.

The first solution may include one or more first cation precursors, and thus, the first cation precursor may further include cadmium (Cd), mercury (Hg), magnesium (Mg), aluminum (Al), manganese (Mn), copper (Cu), gallium (Ga), tin (Sn), barium (Ba), iron (Fe), or strontium (Sr).

Specifically, the first cation precursor may be additionally selected from oxide, peroxide, sulfate, halide, oleate, perchlorate, carboxylate, acetate, phosphate, acetylacetonate, cyanide, carbonate or nitrate of cadmium (Cd), mercury (Hg), magnesium (Mg), aluminum (Al), manganese (Mn), copper (Cu), gallium (Ga), tin (Sn), barium (Ba), iron (Fe) or strontium (Sr), but is not limited thereto.

In addition, the first cation precursor may further include a zinc oxo cluster (Zn Oxocluster). Similar to the indium oxo cluster (In-Oxo), an active metal oxide such as a zinc oxo cluster (Zn-Oxo) may be synthesized by reacting the active metal precursor with carboxylic acid. Specifically, the zinc oxo cluster (Zn-Oxo) may be formed by a reaction of an active metal precursor such as zinc acetate (Zn acetate) and carboxylate such as oleic acid.

The first anion precursor may be a compound containing sulfur (S), selenium (Se), phosphorus (P), tellurium (Te), arsenic (As), nitrogen (N), or antimony (Sb).

For example, the first anion precursor may be selected from sulfur, trialkylphosphine sulfide, trialkenylphosphine sulfide, alkylamino sulfide, alkenylamino sulfide, alkylthiol, selenium, trialkylphosphine selenide, trialkenylphosphine selenide, alkylamino selenide, alkenylamino selenide, trialkylphosphine telluride, trialkenylphosphine telluride, alkylamino telluride, alkenylamino telluride, alkyl phosphine, tris(trialkylsilyl)phosphine, tris(dialkylsilyl)phosphine, tris(dialkylamino)phosphine, arsenic oxide, arsenic chloride, arsenic sulfate, arsenic bromide, arsenic iodide, nitric oxide, nitric acid, and ammoniumnitrate, but is not limited thereto. More specifically, the first anion precursor may include tris(trimethylsilyl)phosphine (TMSP).

The preparing of the first solution may further include mixing the first cation precursor and unsaturated fatty acid and then raising the temperature of the mixture to form a more appropriate first cation precursor. The first cation precursor prepared above may maintain a more stably dispersed form by including an unsaturated fatty acid ligand having a long chain length. For example, the unsaturated fatty acid may be selected from myristic acid, oleic acid, stearic acid, lauric acid, and palmitic acid, and it may be preferable to use oleic acid considering the dispersion stability, size distribution, and luminescence properties of the quantum dots, but is not limited thereto.

The preparing of the first solution includes preparing an indium oxo cluster (In-Oxo). Specifically, the preparing of the indium oxo cluster (In-Oxo) may include mixing indium acetate (Indium (III) acetate) and oleic acid, raising the temperature of the mixed solution to 200°C under vacuum and then converting the pressure to normal pressure, and then adding octadecene (ODE) and synthesizing at 260°C to 300°C for 1 hour or more. The first solution thus includes an indium oxo cluster but is not limited thereto.

In addition, the preparing of the first solution may further include preparing a zinc oxo cluster (Zn-Oxo). Specifically, the preparing of the zinc oxo cluster (Zn-Oxo) may include mixing zinc acetate dehydrate (Zn acetate dehydrate) and oleic acid, raising the temperature to 190°C under vacuum and converting the pressure to normal pressure, and then adding octadecene (ODE) and synthesizing at 300°C to 315°C for 1 hour or more, and thus the first solution may further include a zinc oxo cluster.

The composition ratio of the indium oxo cluster and the zinc oxo cluster in the first solution may be appropriately controlled by considering the emission wavelength of the quantum dots finally formed. For example, the molar ratio of the indium oxo cluster and the zinc oxo cluster may be 1 : 1 to 1 : 0.4. More specifically, the molar ratio of the indium oxo cluster and the zinc oxo cluster may be 1.2 : 1.2 to 1.8 : 0.8 based on a case where the anion precursor, for example, phosphorus (p) is 1, but is not limited thereto.

The preparing of the second solution may further include mixing an anion precursor and trialkylphosphine and then raising the temperature of the mixture to form a more appropriate first anion precursor. The anion precursor prepared in this manner has better dispersion stability by including a long-chain trialkylphosphine ligand. For example, the trialkylphosphine may be selected from trihexylphosphine, trioctylphosphine, and tridecylphosphine, and considering dispersion stability, etc., it is preferable to use trioctylphosphine but is not limited thereto.

Next, the first solution and the second solution are mixed at 20°C to 130°C to prepare a first mixture (S120).

Specifically, the first solution containing the first cation precursor and the second solution containing the first anion precursor may be mixed at a relatively low temperature of 20°C to 130°C, more preferably at 80°C to 120°C. At this time, by mixing the first solution and the second solution at a relatively low temperature, a chemical reaction between the cation precursor and the anion precursor may be inhibited.

The solvent may mix the first cation precursor of the first solution and the first anion precursor of the second solution, and any non-reactive solvent may be appropriately selected and used without particular limitation. Specifically, the solvent may be primary alkylamine having 6 to 22 carbon atoms such as hexadecylamine, secondary alkylamine having 6 to 22 carbon atoms such as dioctylamine, tertiary alkylamine having 6 to 40 carbon atoms such as trioctylamine, nitrogen-containing heterocyclic compounds such as pyridine, aliphatic hydrocarbons (alkane, alkene, alkyne, etc.) having 6 to 40 carbon atoms such as hexadecane, octadecane, octadecene, and squalane, aromatic hydrocarbons having 6 to 30 carbon atoms such as phenyldodecane, phenyltetradecane, and phenyl hexadecane, phosphine substituted with an alkyl group having 6 to 22 carbon atoms such as trioctylphosphine, phosphine oxide substituted with an alkyl group having 6 to 22 carbon atoms such as trioctylphosphine oxide, aromatic ethers having 12 to 22 carbon atoms such as phenyl ether and benzyl ether, and combinations thereof, but is not limited thereto. Preferably, the solvent may be aliphatic hydrocarbons having 6 to 40 carbon atoms, such as octadecene and squalane.

As another example, the solvent may be added in advance in the first solution preparation step and/or the second solution preparation step. Specifically, for example, in the preparing of the first solution, indium acetate and oleic acid may be mixed, the temperature may be raised to 200°C, and then a solvent may be added.

Next, the temperature of the first mixture is rapidly raised to 300°C to 350°C at a rate of 3°C/sec to 10°C/sec within 1 minute (S130).

In step S130, the temperature of the first mixture is rapidly raised to 300°C to 350°C or higher within 120 seconds, preferably within 60 seconds. In this case, there are advantages of greatly shortening the synthesis time and easy mass production. In addition, the quantum dots or cores prepared by rapidly raising the temperature have the advantages of a uniform particle size distribution, a narrow full width at half maximum, and excellent quantum efficiency.

As another example, in step S130, the rapidly raising of the temperature may be completed within a range of 15 to 80 seconds, preferably 30 to 60 seconds. Within this range, there are advantages of being excellent in both productivity and quantum dot quality.

In step S130, the temperature rising rate may be 3°C/sec to 10°C/sec, preferably 3°C/sec to 8°C/sec, and in this case, the synthesis time is greatly shortened, and the size of the obtained quantum dots becomes uniform, thereby exhibiting high quantum efficiency.

More specifically, for example, in step S130, the temperature of the first mixture at 80°C to 120°C may be rapidly raised to 300°C within 120 seconds, preferably within 60 seconds.

The rapidly raising of the temperature may be performed using a rapid heating device. For example, the first mixture may be rapidly heated using radiant heat generated from a lamp. At this time, the temperature of the first mixture may be rapidly raised using a halogen lamp, a tungsten-halogen lamp, or a xenon arc lamp.

The temperature of the first mixture may be raised to 300°C or higher, preferably 300°C to 350°C. If the raised temperature is less than 300°C, quantum dots may not be stably synthesized, the reaction time may become very long, and the particle size distribution may increase. If the temperature exceeds 350°C, the purity of the quantum dots may deteriorate due to a reaction with a trace of oxygen or moisture present in a reactor or other side reactions.

Next, although not illustrated in a schematic flowchart of FIG. 1, the first mixture is heat-treated at 300°C or higher for 1 to 10 seconds while maintaining the raised temperature to prepare quantum dots.

When the temperature of the first mixture is rapidly raised to reach a reaction temperature, the first cation precursor and the first anion precursor in the solution rapidly react with each other and grow to prepare cores of the quantum dots having a uniform shape. In particular, the indium oxo cluster included in the first solution has an advantage of excellent optical durability of quantum dots because the cores are more uniformly distributed to have a Peak to Valley (P-V) value of 0.6 or lower.

Like rapid temperature rising, heat treatment is also performed by radiant heat generated from the lamps of the rapid heating device. The heat treatment may be performed at 300°C or higher for 1 to 10 seconds, and within this range, the quantum dot synthesis time may be significantly shortened to obtain quantum dots with a small size distribution and excellent optical efficiency. As the heat treatment time increases, the particle size increases due to aggregation between particles, and the size distribution increases to increase a full width at half maximum.

In the quantum dot preparing method according to an embodiment of the present invention, at least one of the first solution and the second solution includes two or more precursors, and the first solution may include an indium oxo cluster and a zinc oxo cluster to form quantum dots including at least three or more elements, such as indium (In), zinc (Zn), and phosphorus (P).

Next, although not illustrated in FIG. 1, a heat treatment process may be additionally performed by mixing the temperature-raised first mixture with trioctylphosphine (TOP) and then maintaining the mixture at 300°C or higher for 10 seconds or longer. This process is not an essential process to improve the surface reactivity of the synthesized core but is intended to increase the reactivity and enable a subsequent shell synthesis process to proceed smoothly.

Next, the cooling of the first mixture, of which the temperature is raised, to 100°C or lower within 1 minute to form the core is included (S140). That is, a step of rapidly cooling a product after heat treatment is further included. The rapid cooling may be performed by removing the heat source and cooling to room temperature, and in some cases, the rapid cooling may be performed by air cooling or water cooling. Specifically, the first mixture, which has been rapidly heated to 300°C or higher, may be moved directly to a cooling tank containing cooling water and rapidly cooled to 100°C or lower within 1 minute.

The first mixture including the core prepared through step S140 includes an indium oxo cluster, and thus may be used in a subsequent quantum dot shell formation step as a core solution itself without a separate purification process such as centrifugation after cooling to room temperature. Since a separate purification process such as centrifugation is not required, the process may be simplified, raw materials may be reduced, and process time may be shortened, which has an advantageous effect in terms of the productivity of quantum dots.

In addition, although not illustrated in FIG. 1, the size of the core may be controlled by additionally adding the first cation precursor and the first anion precursor to the core prepared through step S 140. Specifically, the method may further include steps of further adding a first sub solution including the first cation precursor and a second sub solution including the first anion precursor to the core prepared through step S140 above at room temperature to prepare a first sub mixture, rapidly raising the temperature of the first sub mixture to 300°C to 350°C within 1 minute, heat-treating the first sub mixture, of which the temperature is raised, for 10 seconds to 5 minutes, and cooling the heat-treated first sub mixture to 100°C or lower within 1 minute.

At this time, the preparing of the first sub mixture, the rapidly raising of the temperature of the first sub mixture, and the cooling of the first sub mixture may be performed in substantially the same manner as steps S120, S130, and S140, respectively, and thus, a duplicate description is omitted.

The first sub solution and the second sub solution may be the same as the first solution and the second solution prepared in step S110, respectively, but are not limited thereto. For example, the first sub solution and the second sub solution include the first cation precursor, and the first anion precursor included in the first solution and the second solution, respectively, but the included contents may be different from each other.

Meanwhile, the first sub mixture, of which the temperature is raised, is heat-treated for 10 seconds to 5 minutes so that the pre-formed core may grow additionally. Unlike the step of forming the core through the initial steps S110 to S140, sufficient heat treatment time is required to form a core by additionally aggregating particles on the pre-formed core surface.

The size and wavelength of the core prepared through such additional processes may be changed. In addition, the steps of preparing the first sub mixture, rapidly raising the temperature of the first sub mixture, heat-treating the first sub mixture, and cooling the first sub mixture may be repeated. The size and wavelength of the core prepared through the repeated process may be appropriately adjusted.

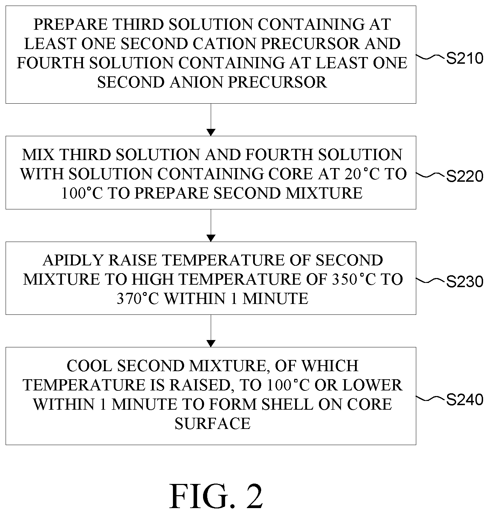

FIG. 2 is a flowchart schematically illustrating a shell formation process in a quantum dot preparing method according to an embodiment of the present invention. FIG. 2 illustrates a process of forming a shell in the core of the quantum dot prepared by the quantum dot preparing method according to an embodiment illustrated in FIG. 1.

Referring to FIG. 2, a quantum dot preparing method according to an embodiment of the present invention includes the steps of: preparing a third solution containing at least one second cation precursor and a fourth solution containing at least one second anion precursor (S210), mixing the third solution and the fourth solution with a solution including a core at 20°C to 100°C to prepare a second mixture (S220), rapidly raising the temperature of the second mixture to 350°C to 370°C within 1 minute (S230), and cooling the second mixture, of which the temperature is raised, to 100°C or lower within 1 minute, to form a shell on the core surface (S240).

Hereinafter, a quantum dot preparing method of the present invention will be described in detail step by step.

First, a third solution containing at least one second cation precursor and a fourth solution containing at least one second anion precursor are prepared (S210).

At this time, at least one of the third solution and the fourth solution may include two or more precursors. For example, the third solution may include two types of cation precursors, and the fourth solution may also include two types of anion precursors, but are not limited thereto.

The second cation precursor may include zinc (Zn), cadmium (Cd), mercury (Hg), indium (In), magnesium (Mg), aluminum (Al), manganese (Mn), copper (Cu), gallium (Ga), tin (Sn), barium (Ba), iron (Fe), or strontium (Sr).

Specifically, the second cation precursor may be selected from oxide, peroxide, sulfate, halide, oleate, perchlorate, carboxylate, acetate, phosphate, acetylacetonate, cyanide, carbonate or nitrate of zinc (Zn), cadmium (Cd), mercury (Hg), indium (In), magnesium (Mg), aluminum (Al), manganese (Mn), copper (Cu), gallium (Ga), tin (Sn), barium (Ba), iron (Fe), or strontium (Sr), but is not limited thereto. More specifically, the second cation precursor may include zinc oleate (Zn-OA).

The second anion precursor may include sulfur (S), selenium (Se), phosphorus (P), tellurium (Te), arsenic (As), nitrogen (N), or antimony (Sb).

For example, the second anion precursor may be selected from sulfur, trialkylphosphine sulfide, trialkenylphosphine sulfide, alkylamino sulfide, alkenylamino sulfide, alkylthiol, selenium, trialkylphosphine selenide, trialkenylphosphine selenide, alkylamino selenide, alkenylamino selenide, trialkylphosphine telluride, trialkenylphosphine telluride, alkylamino telluride, alkenylamino telluride, alkyl phosphine, tris(trialkylsilyl)phosphine, tris(dialkylsilyl)phosphine, tris(dialkylamino)phosphine, arsenic oxide, arsenic chloride, arsenic sulfate, arsenic bromide, arsenic iodide, nitric oxide, nitric acid, and ammoniumnitrate, but is not limited thereto. More specifically, the second anion precursor may include trioctylphosphine selenide (Se-TOP) and trioctylphosphine sulfide (S-TOP).

The preparing of the third solution may further include mixing the second cation precursor and unsaturated fatty acid and then raising the temperature of the mixture to form a more appropriate second cation precursor. The second cation precursor prepared above may maintain a more stably dispersed form by including a long-chain unsaturated fatty acid ligand. For example, the unsaturated fatty acid may be selected from myristic acid, oleic acid, stearic acid, lauric acid, and palmitic acid, and it may be preferable to use oleic acid considering the dispersion stability, size distribution, and luminescence properties of the quantum dots, but is not limited thereto.

The preparing of the third solution includes preparing zinc oleate (Zn-OA). Specifically, the preparing of zinc oleate (Zn-OA) may include steps of mixing zinc acetate dihydrate and oleic acid, then raising the temperature of the mixture to 190°C under vacuum and raising the temperature to 260°C by adding trioctylamine (TOA) and then cooling the mixture, and thus the third solution includes zinc oleate (Zn-OA), but is not limited thereto.

The composition ratio of zinc (Zn) and oleic acid in the third solution may be appropriately controlled by considering the emission wavelength of the quantum dots finally formed. For example, the molar ratio of zinc and oleic acid may be 1 : 1.3 to 1 : 1.7, and preferably 1 : 1.5, but is not limited thereto.

The preparing of the fourth solution may further include mixing an anion precursor and trialkylphosphine and then raising the temperature of the mixture to form a more appropriate anion precursor. The anion precursor prepared in this manner has better dispersion stability by including a long-chain trialkylphosphine ligand. For example, the trialkylphosphine may be selected from trihexylphosphine, trioctylphosphine, and tridecylphosphine, and considering dispersion stability, etc., it may be preferable to use trioctylphosphine but is not limited thereto.

Specifically, the preparing of the fourth solution is performed by mixing selenium, sulfur and trioctylphosphine and then raising the temperature to 100°C to 150°C, in which the fourth solution includes trioctylphosphine sulfide and trioctylphosphine selenide but is not limited thereto.

The composition ratio of sulfur (S) and selenium (Se) in the fourth solution may be appropriately controlled by considering the emission wavelength of the quantum dots finally formed. For example, the molar ratio of sulfur and selenium may be 1 : 1 to 1 : 2.5, and preferably 1 : 1.4 to 1 : 2.0, but is not limited thereto.

Next, the preparing of the second mixture by mixing the third solution and the fourth solution with the solution containing the core at 20°C to 100°C (S220) is included.

Specifically, the third solution containing the second cation precursor and the fourth solution containing the second anion precursor may be mixed at a relatively low temperature of 20°C to 100°C, more preferably at 80°C to 100°C. At this time, by mixing the third solution, the fourth solution, and the synthesized core solution at a relatively low temperature, a chemical reaction between the cation precursor and the anion precursor may be inhibited.

The solvent may mix the second cation precursor of the third solution and the second anion precursor of the fourth solution, and any non-reactive solvent may be appropriately selected and used without particular limitation. Specifically, the solvent may be primary alkylamine having 6 to 22 carbon atoms such as hexadecylamine, secondary alkylamine having 6 to 22 carbon atoms such as dioctylamine, tertiary alkylamine having 6 to 40 carbon atoms such as trioctylamine, nitrogen-containing heterocyclic compounds such as pyridine, aliphatic hydrocarbons (alkane, alkene, alkyne, etc.) having 6 to 40 carbon atoms such as hexadecane, octadecane, octadecene, and squalane, aromatic hydrocarbons having 6 to 30 carbon atoms such as phenyldodecane, phenyltetradecane, and phenyl hexadecane, phosphine substituted with an alkyl group having 6 to 22 carbon atoms such as trioctylphosphine, phosphine oxide substituted with an alkyl group having 6 to 22 carbon atoms such as trioctylphosphine oxide, aromatic ethers having 12 to 22 carbon atoms such as phenyl ether and benzyl ether, and combinations thereof, but is not limited thereto. Preferably, the solvent may be aliphatic hydrocarbons having 6 to 40 carbon atoms, such as octadecene and squalane.

As another example, the solvent may be added in advance in the third solution preparation step and/or the fourth solution preparation step. Specifically, for example, in the preparing of the third solution, zinc acetate and oleic acid may be mixed, then the temperature may be raised to 190°C, and then a solvent may be added.

Next, the temperature of the second mixture is rapidly raised to 350°C to 400°C within 1 minute (S230).

In step S230, the temperature of the second mixture is rapidly raised to 350°C to 400°C or 350°C to 370°C within 120 seconds, preferably within 60 seconds. In this case, there are advantages of greatly shortening the synthesis time and easy mass production. In addition, the quantum dots prepared by rapidly raising the temperature have the advantages of a uniform particle size distribution, a narrow full width at half maximum, and excellent quantum efficiency.

As another example, in step S230, the rapidly raising of the temperature may be completed within a range of 15 to 80 seconds, preferably 30 to 60 seconds. Within this range, there are advantages of being excellent in both productivity and quantum dot quality.

More specifically, for example, in step S230, the temperature of the second mixture at 20°C to 100°C may be rapidly raised to 350°C to 370°C within 60 seconds.

The rapidly raising of the temperature may be performed using a rapid heating device. For example, the second mixture may be rapidly heated using radiant heat generated from a lamp. At this time, the temperature of the second mixture may be rapidly raised using a halogen lamp, a tungsten-halogen lamp, or a xenon arc lamp.

The temperature of the second mixture may be raised to 350°C or higher, preferably 350°C to 370°C. If the raised temperature is less than 350°C, quantum dots may not be stably synthesized, the reaction time may become very long, and the particle size distribution may increase. If the temperature exceeds 370°C, the purity of the quantum dots may deteriorate due to a reaction with a trace of oxygen or moisture present in a reactor or other side reactions.

Next, although not illustrated in a schematic flowchart of FIG. 2, the second mixture is heat-treated at 350°C to 400°C for 30 seconds to 5 minutes while maintaining the raised temperature to prepare quantum dots.

When the temperature of the second mixture is rapidly raised to reach a reaction temperature, the second cation precursor and the second anion precursor in the solution rapidly react with each other and grow to prepare a quantum dot including a shell having an alloy shape. The quantum dots having the alloy shape have an advantage of excellent optical durability of the quantum dots because the quantum dots have no shell boundaries, and the shells are uniformly distributed to minimize lattice constant mismatch.

Like rapid temperature rising, heat treatment is also performed by radiant heat generated from the lamps of the rapid heating device. The heat treatment may be performed at 350°C to 370°C for 30 seconds to 5 minutes, and within this range, the quantum dot synthesis time may be significantly shortened to obtain quantum dots with a small size distribution and excellent optical efficiency. As the heat treatment time increases, the particle size increases due to aggregation between particles, and the size distribution increases to increase a full width at half maximum.

In the quantum dot preparing method according to an embodiment of the present invention, since at least one of the third solution and the fourth solution includes two or more precursors, quantum dots are formed by including shells consisting of at least three or more elements. For example, the quantum dot prepared by the preparing method according to an embodiment of the present invention has a single shell shape consisting of three or more elements, such as Zn-Se-S.

Next, the cooling of the second mixture, of which the temperature is raised, to 100°C or lower within 1 minute to form the shell on the core surface is included (S240). That is, a step of rapidly cooling a product after heat treatment is further included. The rapid cooling may be performed by removing the heat source and cooling to room temperature, and in some cases, the rapid cooling may be performed by air cooling or water cooling. Specifically, the second mixture, of which the temperature is rapidly raised to 350°C to 370°C, may be moved directly to a cooling tank containing cooling water after heat-treating step and rapidly cooled to 100°C or lower within 1 minute.

The product cooled to room temperature may be washed and purified to obtain quantum dots with desired purity. The washing and purification may include adding a nonsolvent to the resultant to separate the quantum dots. The nonsolvent is a polar solvent that is mixed with an organic solvent used in the reaction, but may not disperse the quantum dots, and may be acetone, ethanol, butanol, isopropanol, ethanediol, water, tetrahydrofuran (THF), dimethyl sulfoxide (DMSO), diethyl ether, or formaldehyde, but is not limited thereto. In addition, the purification may include separating the quantum dots by a method such as centrifugation, precipitation, chromatography, or distillation. In addition, the quantum dots may be re-dispersed in a solvent after purification.

In the quantum dot preparing method according to an embodiment of the present invention, since the first solution uses the indium oxo cluster and the zinc oxo cluster as the first cation precursor, the first solution containing the first cation precursor and the second solution containing the first anion precursor are first mixed at a low temperature to prepare the first mixture, and then the first mixture rapidly reacts within a short period of time by rapid temperature raising and heat treatment to form a quantum dot having a uniform core.

Unlike a conventional preparing method of injecting an anion precursor solution into a cation precursor solution at a temperature of 100°C or higher and then reacting at 200°C to 280°C for a certain period of time to prepare a core with a uniform distribution, a quantum dot preparing method according to an embodiment of the present invention may prepare quantum dots by mixing a cation precursor and an anion precursor at a low temperature, rapidly heating to 300°C or higher, and then rapidly cooling, thereby having advantages of shortening the reaction time and cooling time and facilitating mass production.

In addition, a conventional quantum dot preparing method using a high-temperature injection method may prepare quantum dots containing three or more elements through a single reaction but has a problem in that the energy cost consumed for heating a reaction solution to a high temperature of 300°C or higher was rapidly increased as a synthesis scale was increased. The quantum dot preparing method according to an embodiment of the present invention provides an advantage of mass-producing quantum dots with a relatively small amount of heat treatment by rapidly temperature-raising and heat-treating a precursor solution using radiant heat generated from a lamp.

In addition, unlike a conventional quantum dot preparing method having a core-shell structure, in which a core is formed and then the core may be obtained through a purification process such as centrifugation, in the quantum dot preparing method according to an embodiment of the present invention, the core solution prepared without centrifugation is used as it is to simplify the process and minimize a waste liquid, and thus has an effect of reducing cost and shortening process time, which is advantageous in terms of the productivity of quantum dots.

In addition, the quantum dot prepared by the quantum dot preparing method according to an embodiment of the present invention has a narrow full width at half maximum compared to a quantum dot having a conventional core-shell structure. When the cation precursor includes an indium oxo cluster and a zinc oxo cluster, the first mixture may be rapidly heated and rapidly cooled to prepare a uniform core, thereby reducing lattice fatigue and narrowing the full width at half maximum. In addition, even in the process of forming the shell on the core surface, a uniform alloy shell may be formed by mixing a cation precursor and an anion precursor at a low temperature and then performing a rapid heating and rapid cooling process, thereby narrowing the full width at half maximum. In particular, the ratio of zinc (Zn) and oleic acid (OA) is adjusted to 1 : 1.5 during the shell formation process to make the full width at half maximum narrower. Due to this, the quantum dot preparing method according to an embodiment of the present invention may have high quantum efficiency.

In addition, the quantum dots prepared by the quantum dot preparing method according to an embodiment of the present invention may secure optical stability and thermal stability by performing a heat treatment process at a high temperature of 350°C or higher.

In addition, in the related art, since the wavelength of the core determines the wavelength of the final quantum dot, if the wavelength is not matched, the core needs to be synthesized first, and thus there is a problem of increasing the cost and increasing the defect rate. In contrast, the quantum dot preparing method according to an embodiment of the present invention may control the wavelength not only by adjusting the ratio of the indium oxo cluster (In-Oxo) and the zinc oxo cluster (Zn-Oxo) of the core, but also by adjusting the ratio of zinc (Zn) and oleic acid (OA) of the shell, or the ratio of trioctylphosphine selenide (Se-TOP) and trioctylphosphine sulfide (S-TOP). That is, quantum dots of various wavelength ranges may be synthesized using a single core, and conversely, quantum dots of the same wavelength range may also be synthesized using cores of various wavelengths. Accordingly, even if the wavelength formed in the core is not matched, the wavelength may be controlled during the shell formation process to have effects of minimizing the defect rate, reducing costs, and shortening the process time, which is very advantageous in terms of productivity.

### Example 1-1: Synthesis of core of red fluorescent quantum dot

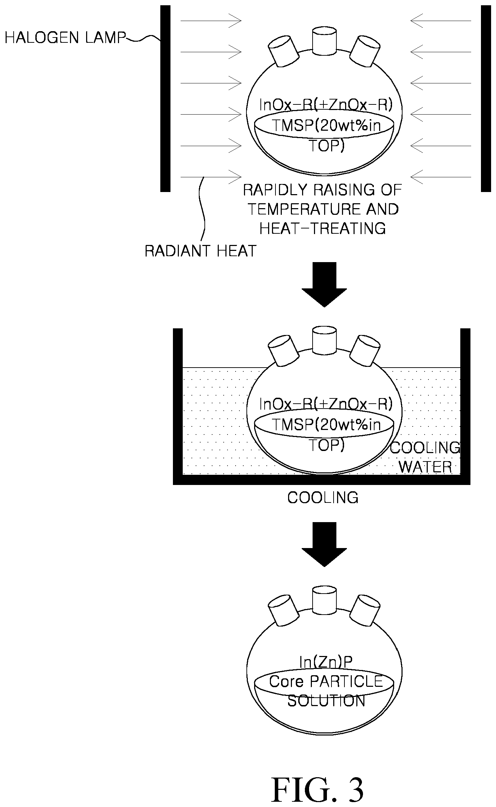

FIG. 3 is a schematic diagram for describing a quantum dot preparing method according to an embodiment of the present invention. Referring to FIG. 3, Example of the present invention will be described.

First, 63 g (216.0 mmol) of indium (III) acetate and 183 g (648.0 mmol) of oleic acid were mixed in a 2 L container, heated to 200°C under vacuum, then changed to normal pressure, added with octadecene (ODE) and synthesized at 260°C to 300°C for 1 hour or more to prepare a first cation precursor of an indium oxo cluster.

200 g (57.6 mmol) of the prepared indium oxo cluster solution was added in a 1 L quartz container and added with 48 g (38.4 mmol) of TMSP (20 wt% in TOP) at 130°C to prepare a first mixture. At this time, the molar ratio of indium (In) : phosphorus (P) of the first mixture was 1.5 : 1.

Next, the first mixture, in which the first cation precursor and the first anion precursor were mixed, was rapidly heated to 300°C at a rate of about 200°C per minute using radiant heat, and then the heat-treated first mixture was rapidly cooled to 100°C or lower within 1 minute to form a quantum dot core.

### Example 1-2: Synthesis of core of red fluorescent quantum dot

In a quantum dot preparing method according to Example 1-2, the solution containing the quantum dot core prepared in Example 1-1 was further added with 100 g (28.8 mmol) of an indium oxocluster solution and 36 g (28.8 mmol) of TMSP (20 wt% in TOP), and rapidly heated to 300°C by raising the temperature at a rate of approximately 200°C per minute using radiant heat, and then the heat-treated mixture was rapidly cooled to 100°C or lower within 1 minute to form a quantum dot core.

### Example 1-3: Synthesis of core of red fluorescent quantum dot

In a quantum dot preparing method according to Example 1-3, the solution containing the quantum dot core prepared in Example 1-2 was further added with 100 g (28.8 mmol) of an indium oxocluster solution and 36 g (28.8 mmol) of TMSP (20 wt% in TOP), and rapidly heated to 300°C by raising the temperature at a rate of about 200°C per minute using radiant heat, and then reacted for 1 minute while maintaining the same temperature. Thereafter, the heat-treated mixture was rapidly cooled to 100°C or lower within 1 minute to form a quantum dot core.

### Example 1-4: Synthesis of core of red fluorescent quantum dot

In a quantum dot preparing method according to Example 1-4, the solution containing the quantum dot core prepared in Example 1-3 was further added with 100 g (28.8 mmol) of an indium oxocluster solution and 36 g (28.8 mmol) of TMSP (20 wt% in TOP), and rapidly heated to 300°C by raising the temperature at a rate of approximately 200°C per minute using radiant heat, and then reacted for 1 minute while maintaining the same temperature. Thereafter, the heat-treated mixture was rapidly cooled to 100°C or lower within 1 minute to form a quantum dot core.

### Example 1-5: Synthesis of core of red fluorescent quantum dot

In a quantum dot preparing method according to Example 1-5, the solution containing the quantum dot core prepared in Example 1-4 was further added with 50 g (14.4 mmol) of an indium oxocluster solution and 18 g (14.4 mmol) of TMSP (20 wt% in TOP), and rapidly heated to 300°C by raising the temperature at a rate of approximately 200°C per minute using radiant heat, and then reacted for 1 minute while maintaining the same temperature. Thereafter, the heat-treated mixture was rapidly cooled to 100°C or lower within 1 minute to form a quantum dot core.

### Example 1-6: Synthesis of core of red fluorescent quantum dot

In a quantum dot preparing method according to Example 1-6, the solution containing the quantum dot core prepared in Example 1-5 was further added with 50 g (14.4 mmol) of an indium oxocluster solution and 18 g (14.4 mmol) of TMSP (20 wt% in TOP), and rapidly heated to 300°C by raising the temperature at a rate of approximately 200°C per minute using radiant heat, and then reacted for 1 minute while maintaining the same temperature. Thereafter, the heat-treated mixture was rapidly cooled to 100°C or lower within 1 minute to form a quantum dot core.

### Example 2-1: Synthesis of core of green fluorescent quantum dot

First, 63 g (216.0 mmol) of indium (III) acetate and 183 g (648.0 mmol) of oleic acid were mixed in a 2 L container, heated to 200°C under vacuum, then changed to normal pressure, added with octadecene (ODE) and synthesized at 260°C to 300°C for 1 hour or more to prepare a first cation precursor of an indium oxo cluster.

Next, 47 g (216.0 mmol) of zinc acetate dihydrate and 122 g (432.0 mmol) of oleic acid were mixed in a 1 L container, heated to 190°C under vacuum, then changed to normal pressure, added with octadecene (ODE) and synthesized at 300°C to 315°C for 1 hour or more to prepare a first cation precursor of a zinc oxo cluster.

180 g (51.8 mmol) of the prepared indium oxocluster solution and 43 g (23.0 mmol) of the zinc oxocluster solution were mixed in a 1 L quartz container, heated to 100°C under a N₂ atmosphere, and added with 36 g (28.8 mmol) of TMSP (20 wt% in TOP) to prepare a first mixture. At this time, the molar ratio of indium (In) : zinc (Zn) : phosphorus (P) of the first mixture was 1.8 : 0.8 : 1.

Next, the first mixture in which the first cation precursor and the first anion precursor were mixed was rapidly heated to 300°C at a rate of about 200°C per minute using radiant heat, and then reacted for 0 to 10 seconds while maintaining the same reaction temperature. Thereafter, the heat-treated first mixture was rapidly cooled to 100°C or lower within 1 minute to form a core solution.

### Example 2-2: Synthesis of core of green fluorescent quantum dot

A quantum dot preparing method according to Example 2-2 is substantially the same as the quantum dot preparing method according to Example 2-1 in other configuration, except for only a different synthesis ratio of the indium oxo cluster and the zinc oxo cluster, and thus a duplicate description is omitted.

In the quantum dot preparing method according to Example 2-2, an indium oxocluster solution and a zinc oxocluster solution were mixed in a 1 L quartz container so that the molar ratio of indium (In) : zinc (Zn) :phosphorus (P) was 1.8 : 1.2 : 1, heated to 100°C under a N₂ atmosphere, and added with TMSP (20 wt% in TOP) to prepare a first mixture.

### Example 2-3: Synthesis of core of green fluorescent quantum dot

A quantum dot preparing method according to Example 2-3 is substantially the same as the quantum dot preparing method according to Example 2-1 in other configuration, except for only a different synthesis ratio of the indium oxo cluster and the zinc oxo cluster, and thus a duplicate description is omitted.

In the quantum dot preparing method according to Example 2-3, an indium oxocluster solution and a zinc oxocluster solution were mixed in a 1 L quartz container so that the molar ratio of indium (In) : zinc (Zn) : phosphorus (P) was 1.5 : 0.8 : 1, heated to 100°C under a N₂ atmosphere, and added with TMSP (20 wt% in TOP) to prepare a first mixture.

### Example 2-4: Synthesis of core of green fluorescent quantum dot

A quantum dot preparing method according to Example 2-4 is substantially the same as the quantum dot preparing method according to Example 2-1 in other configuration, except for only a different synthesis ratio of the indium oxo cluster and the zinc oxo cluster, and thus a duplicate description is omitted.

In the quantum dot preparing method according to Example 2-4, an indium oxocluster solution and a zinc oxocluster solution were mixed in a 1 L quartz container so that the molar ratio of indium (In) : zinc (Zn) : phosphorus (P) was 1.2 : 0.8 : 1, heated to 100°C under a N₂ atmosphere, and added with TMSP (20 wt% in TOP) to prepare a first mixture.

### Example 2-5: Synthesis of core of green fluorescent quantum dot

A quantum dot preparing method according to Example 2-5 is substantially the same as the quantum dot preparing method according to Example 2-1 in other configuration, except for only a different synthesis ratio of the indium oxo cluster and the zinc oxo cluster, and thus a duplicate description is omitted.

In the quantum dot preparing method according to Example 2-5, an indium oxocluster solution and a zinc oxocluster solution were mixed in a 1 L quartz container so that the molar ratio of indium (In) : zinc (Zn) : phosphorus (P) was 1.2 : 1.2 : 1, heated to 100°C under a N₂ atmosphere, and added with TMSP (20 wt% in TOP) to prepare a first mixture.

### Comparative Example 1: Synthesis of core prepared by conventional method

A quantum dot preparing method according to Comparative Example 1 was a conventional method, and other configuration are substantially the same as those of the quantum dot preparing method according to Example 2-1, except for using an indium oleate (In-OA) solution and a zinc oleate (Zn-OA) solution as a first cation precursor instead of the indium oxocluster solution and the zinc oxocluster solution and only a different synthesis ratio, and thus the duplicated description will be omitted.

In the quantum dot preparing method according to Comparative Example 1, an indium oleate solution and a zinc oleate solution were mixed in a 1 L quartz container so that the molar ratio of indium (In) : zinc (Zn) : phosphorus (P) was 1.5 : 0.8 : 1, heated to 100°C under a N₂ atmosphere, and added with TMSP (20 wt% in TOP) to prepare a first mixture.

### Experimental Example 1 - Performance Evaluation

The wavelength (Core λ) and P-V (Peak to Valley) values of the cores prepared according to the preparing methods of Examples 1-1 to 2-5 and Comparative Example 1 were measured. Detailed results were shown in Tables 1 and 2 below. Table 1 described the measurements for the cores of the red fluorescent quantum dots prepared in Examples 1-1 to 1-6, and Table 2 described the measurements for the cores of the green fluorescent quantum dots prepared in Examples 2-1 to 2-5 and Comparative Example 1.

**[Table 1]**

| Classification | Precursor mole ratio | | Precursor added amount (g) | | Core λ | P/V |
|---|---|---|---|---|---|---|
| | In | P | InOxo solution (g) | TMSP (g) (20 wt%) | | |
| Example 1 | 1.5 | 1.0 | 200 | 48 | 510 | 0.48 |
| Example 2 | 1.0 | 1.0 | 100 | 36 | 530 | 0.49 |
| Example 3 | 1.0 | 1.0 | 100 | 36 | 550 | 0.52 |
| Example 4 | 1.0 | 1.0 | 100 | 36 | 572 | 0.55 |
| Example 5 | 1.0 | 1.0 | 50 | 18 | 583 | 0.56 |

First, the cores of the red fluorescent quantum dots prepared according to the preparing methods of Examples 1-1 to 1-6 used an indium oxo cluster (In Oxocluster) as a cation precursor and TMSP as an anion precursor. At this time, referring to Table 1, it may be confirmed that the cores prepared according to the preparing methods of Examples 1-1 to 1-6 all have excellent P/V (Peak to Valley) values of 0.6 or less due to a uniform core distribution. In addition, the core wavelength (Core λ) has different values by differently controlling the molar ratio of indium (In) : phosphorus (P) and the added amount of precursor. That is, it may be confirmed that the wavelength may be controlled by a ratio of the indium oxo cluster and TMSP, an amount of precursor added, and the number of adding times the precursor, etc. Accordingly, it may be seen that the quantum dots prepared according to the preparing methods of Examples 1-1 to 1-6 may easily control the wavelengths, thereby ensuring quality stability and having excellent reproducibility.

**[Table 2]**

| Classification | Precursor mole ratio | | | Core λ | P/V |
|---|---|---|---|---|---|
| | In | Zn | P | | |
| Example 2-1 | 1.8 | 0.8 | 1 | 470 | 0.55 |
| Example 2-2 | 1.8 | 1.2 | 1 | 458 | 0.55 |
| Example 2-3 | 1.5 | 0.8 | 1 | 446 | 0.59 |
| Example 2-4 | 1.2 | 0.8 | 1 | 436 | 0.56 |
| Example 2-5 | 1.2 | 1.2 | 1 | 424 | 0.59 |
| Comparative Example 1 | 1.5 | 0.8 | 1 | 458 | 0.71 |

The cores prepared according to the preparing methods of Examples 2-1 to 2-5 were obtained by mixing a cation precursor including an indium oxo cluster and a zinc oxo cluster and an anion precursor at a low temperature, rapidly heating the mixture to 300°C or higher within 1 minute, and then rapidly cooling the heated mixture. Referring to Table 2, the cores prepared according to the preparing methods of Examples 2-1 to 2-5 all have good P/V (Peak to Valley) values of 0.6 or less due to a uniform core distribution. In particular, it may be confirmed that the core prepared according to the preparing method of Comparative Example 1 prepared by the conventional method had a P/V value of 0.71 even though the ratio of indium (In) : zinc (Zn) : phosphorus (P) was the same as that of Example 2-3, and thus Examples 2-1 to 2-5 of the present invention using the indium oxo cluster solution and the zinc oxo cluster solution were excellent. In addition, the core wavelength (Core λ) has different values by differently controlling the ratio of indium (In) : zinc (Zn) : phosphorus (P). That is, it may be confirmed that the wavelength may be controlled depending on the adding amount and molar ratio of the oxo cluster precursor. Accordingly, it may be seen that the quantum dots prepared according to the preparing methods of Examples 2-1 to 2-5 may easily control the wavelengths, thereby ensuring quality stability and having excellent reproducibility.

### Example 3: Synthesis of shell on core surface of green fluorescent quantum dot

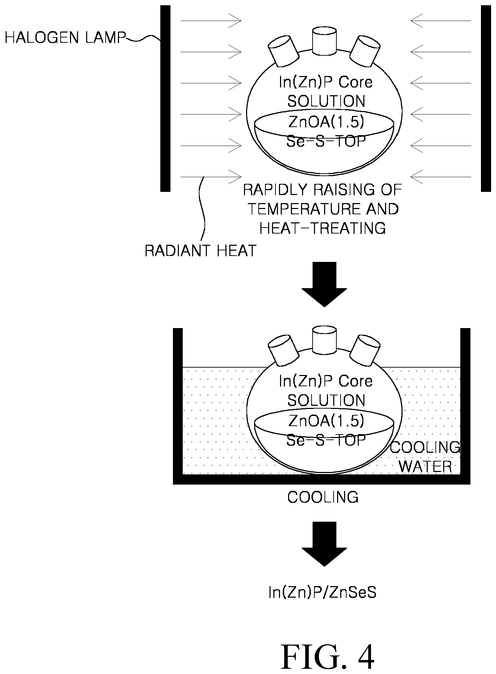

FIG. 4 is a schematic diagram for describing a quantum dot preparing method according to an embodiment of the present invention. Referring to FIG. 4, Example of the present invention will be described.

First, 2063 g (9396.0 mmol) of zinc acetate dihydrate and 3981 g (14094.0 mmol) of oleic acid were mixed in a 20 L container, heated to 190°C under vacuum and stirred, and then added with 3608 g of trioctylamine (TOA), heated to 260°C, and cooled to prepare a second cation precursor of zinc oleate (Zn-OA). At this time, the molar ratio of zinc (Zn) to oleic acid (OA) in zinc oleate (Zn-OA) was 1 : 1.5.

Next, 948 g (12000.0 mmol) of selenium (Se) powder and 5485 g (6.6 L) of trioctylphosphine (TOP) were mixed in a 10 L container, heated to 250°C under vacuum in a N₂ atmosphere, stirred until completely dissolved, and then cooled to prepare a second anion precursor of trioctylphosphine selenide (Se-TOP).

Next, 769.68g (24,000.0 mmol) of sulfur (S) powder and 10637 g (12.8 L) of trioctylphosphine (TOP) were mixed in a 30 L container, heated to 150°C under vacuum in a N₂ atmosphere, stirred until completely dissolved, and then cooled to prepare a second anion precursor of trioctylphosphine sulfide (S-TOP).

In addition, 273 g (313.2 mmol of Zn) of zinc oleate (Zn-OA) having zinc (Zn) : oleic acid (OA) of 1 : 1.5 and 4 g of trioctylphosphine (TOP) were mixed in a 1 L quartz container with 35 g of the core solution of Example 2-2 of indium (In) : zinc (Zn) : phosphorus (P) of 1.8 : 1.2 : 1, stirred, and then added with 21 g (39.1 mmol) of pre-prepared trioctylphosphine selenide (Se-TOP) and 27 g (56.7 mmol) of trioctylphosphine sulfide (S-TOP) at room temperature of 20°C to 24°C to prepare a second mixture.

Next, the second mixture in which the core solution obtained in Example 2-2, the second cation precursor, and the second anion precursor were mixed was rapidly heated to 370°C by raising the temperature by about 200°C per minute using radiant heat, and then reacted for 30 seconds to 5 minutes while maintaining the temperature at 350°C to 370°C. Thereafter, the heat-treated second mixture was rapidly cooled to 100°C or lower within 1 minute to obtain quantum dots with a ZnSeS shell formed on the surface of the InZnP core.

### Comparative Example 2-1: Synthesis of shell on core surface of green fluorescent quantum dot

A quantum dot preparing method according to Comparative Example 2-1 is substantially the same as the quantum dot preparing method according to Example 3 in other configuration, except for only a different synthesis ratio of zinc (Zn) and oleic acid (OA), and thus a duplicate description is omitted.

In Comparative Example 2-1, 2063 g (9396.0 mmol) of zinc acetate dihydrate and 5308 g (18792.0 mmol) of oleic acid were mixed in a 20 L container, heated to 190°C under vacuum and stirred, and then added with 3608 g of trioctylamine (TOA), heated to 260°C, and cooled to prepare a second cation precursor of zinc oleate (Zn-OA). At this time, the molar ratio of zinc (Zn) to oleic acid (OA) in zinc oleate (Zn-OA) was 1 : 2.

### Comparative Example 2-2: Synthesis of shell on core surface of green fluorescent quantum dot

A quantum dot preparing method according to Comparative Example 2-2 is substantially the same as the quantum dot preparing method according to Example 3 in other configuration, except for only a different synthesis ratio of zinc (Zn) and oleic acid (OA), and thus a duplicate description is omitted.

In Comparative Example 2-2, zinc acetate dihydrate and oleic acid were mixed in a 20 L container so that the molar ratio of zinc (Zn) : oleic acid (OA) of zinc oleate (Zn-OA) was 1 : 1, heated to 190°C under vacuum and stirred, and then added with 3608 g of trioctylamine (TOA), heated to 260°C, and cooled to prepare a second cation precursor of zinc oleate (Zn-OA).

### Comparative Example 2-3: Synthesis of shell on core surface of green fluorescent quantum dot

The quantum dot preparing method according to Comparative Example 2-3 was substantially the same as the quantum dot preparing method according to Example 2-1 in other configurations, except for only a heating rate of the second mixture, and thus a duplicate description is omitted.

In Comparative Example 2-3, the second mixture in which the core solution, the second cation precursor, and the second anion precursor were mixed was slowly heated to 370°C by raising the temperature by about 15°C per minute using conductive heat, and then reacted for 30 seconds to 5 minutes while maintaining the temperature at 350°C to 370°C. Thereafter, the heat-treated second mixture was rapidly cooled to 100°C or lower within 1 minute to obtain a quantum dot with a shell formed on the core surface.

### Experimental Example 2 - Performance Evaluation

A maximum peak wavelength (PL Max), a full width at half maximum (FWHM), and quantum efficiency (QY) of the quantum dots prepared according to the preparing methods of Example 3, and Comparative Examples 2-1 and 2-2 were measured. Specific results were shown in Table 3 below.

**[Table 3]**

| Example | Example 3 (Zn : OA = 1 : 1.5) | Comparative Example 2-1 (Zn : OA = 1 : 2) | Comparative Example 2-2 (Zn : OA = 1 : 1) |
|---|---|---|---|
| PL Max (nm) | 530 | 524 | 533 |
| FWHM (nm) | 34 | 37 | 33 |
| QY (%) | 95 | 96 | 84 |

The quantum dots prepared according to the preparing methods of Example 3, and Comparative Examples 2-1 and 2-2 had the same other configurations, except for only a different molar ratio of zinc (Zn) and oleic acid (OA). Referring to Table 3, the quantum dot having a molar ratio of zinc (Zn) and oleic acid (OA) of 1 : 1.5 according to the preparing method of Example 3 had a narrow full width at half maximum (FWHM) of 34 nm and high quantum efficiency (QY) of 95%. On the contrary, the quantum dot having a molar ratio of zinc (Zn) and oleic acid (OA) of 1 : 2 according to the preparing method of Comparative Example 2-1 had quantum efficiency (QY) of 96%, which was similar to that of Example 2-1, but had a wide full width at half maximum (FWHM) of 37 nm. In addition, the quantum dot having a molar ratio of zinc (Zn) and oleic acid (OA) of 1: 1 according to the preparing method of Comparative Example 2-2 had a full width at half maximum (FWHM) of 33 nm, which was similar to that of Example 2-1, but had low quantum efficiency (QY) of 84%. Accordingly, it may be confirmed that the molar ratio of zinc (Zn) and oleic acid (OA) of zinc oleate (ZnOA), which is the second cation precursor required in the process of forming the shell on the core surface, is preferably at the level of 1 : 1.5.

In addition, the quantum dots prepared according to the preparing methods of Example 3 and Comparative Examples 2-1 and 2-2 had different maximum peak wavelengths (PL Max) as the molar ratios of zinc (Zn) and oleic acid (OA) were each controlled differently. That is, it may be confirmed that the wavelength may be controlled depending on the adding amount and molar ratio of the second cation precursor consisting of zinc acetate and oleic acid. Accordingly, even if a core wavelength range is fixed by a single core, various wavelengths may be synthesized by adjusting the ratio of zinc (Zn) and oleic acid (OA). That is, quantum dots of various wavelength ranges may be synthesized using a single core, and conversely, quantum dots of the same wavelength range may also be synthesized using cores of various wavelength ranges, thereby minimizing a defect rate.

### Experimental Example 3 - Performance Evaluation

A maximum peak wavelength (PL Max), a full width at half maximum (FWHM), and quantum efficiency (QY) of the quantum dots prepared according to the preparing methods of Example 3 and Comparative Example 2-3 were measured. Specific results were shown in Table 4 below.

**[Table 4]**

| Example | Example 3 (200°C/min) | Comparative Example 2-3 (15°C/min) |
|---|---|---|
| PL Max (nm) | 530 | 532 |
| FWHM (nm) | 34 | 37 |
| QY (%) | 95 | 91 |

The quantum dots prepared according to the preparing methods of Example 3 and Comparative Example 2-3 have the same other configurations, except for only a different heating rate of the second mixture. That is, Example 3 was a quantum dot reacted by rapidly heating the second mixture to 370°C by raising the temperature by about 200°C per minute using radiant heat, and Comparative Example 2-3 is a quantum dot reacted by slowly heating the second mixture to 370°C by raising the temperature by about 15°C per minute using conductive heat. Referring to Table 4, the quantum dots rapidly heated at a heating rate of 200°C/min in Example 3 had a narrow full width at half maximum (FWHM) of 34 nm and high quantum efficiency (QY) of 95%. In contrast, the quantum dot heated slowly at a heating rate of 15°C/min in Comparative Example 2-3 not only had a wide full width at half maximum (FWHM) of 37 nm, but also had low quantum efficiency (QY) of 91%. Accordingly, it may be confirmed that when the second mixture is rapidly heated using radiant heat, excellent quantum dots having a narrow full width at half maximum (FWHM) and high quantum efficiency (QY) may be obtained. In addition, the quantum dots prepared according to the preparing methods of Example 3 and Comparative Example 2-3 have different values for the maximum peak wavelength (PL Max) because the heating rate of the second mixture is set differently. That is, it may be confirmed that the wavelength may be controlled depending on the heating rate of the second mixture. Accordingly, even if the core wavelength range is fixed by a single core, various wavelengths may be synthesized by controlling the heating rate. That is, the wavelength of the quantum dot prepared by the preparing method according to one embodiment of the present invention may be controlled not only by the content ratio of the precursor, but also by a heating rate, a reaction rate, reaction time, etc.

### Example 4-1: Synthesis of shell on core surface of green fluorescent quantum dot

The quantum dot preparing method according to Example 4-1 was substantially the same as the quantum dot preparing method according to Example 3 in other configurations, except for only a core solution, and thus a duplicate description is omitted.

In Example 4-1, 273 g (313.2 mmol of Zn) of zinc oleate (Zn-OA) having zinc (Zn) : oleic acid (OA) of 1 : 1.5 and 4 g of trioctylphosphine (TOP) were mixed in a 1 L quartz container with 34.6 g of the core solution of Example 1-1 of indium (In) : zinc (Zn) : phosphorus (P) of 1.8 : 0.8 : 1, stirred, and then added with 21 g (39.1 mmol) of pre-prepared trioctylphosphine selenide (Se-TOP) and 27 g (56.7 mmol) of trioctylphosphine sulfide (S-TOP) at room temperature of 20°C to 24°C to prepare a second mixture.

### Example 4-2: Synthesis of shell on core surface of green fluorescent quantum dot

A quantum dot preparing method according to Example 4-2 is substantially the same as the quantum dot preparing method according to Example 4-1 in other configuration, except for only a different synthesis ratio of trioctylphosphine selenide (Se-TOP) and trioctylphosphine sulfide (S-TOP), and thus a duplicate description is omitted.

In the quantum dot preparing method according to Comparative Example 4-2, a second mixture was prepared by adding trioctylphosphine selenide (Se-TOP) and trioctylphosphine sulfide (S-TOP) so that the molar ratio of selenium (Se) : sulfur (S) was 1.0 : 1.96.

### Example 4-3: Synthesis of shell on core surface of green fluorescent quantum dot

A quantum dot preparing method according to Example 4-3 is substantially the same as the quantum dot preparing method according to Example 4-1 in other configuration, except for only a different synthesis ratio of trioctylphosphine selenide (Se-TOP) and trioctylphosphine sulfide (S-TOP), and thus a duplicate description is omitted.

In the quantum dot preparing method according to Example 4-3, a second mixture was prepared by adding trioctylphosphine selenide (Se-TOP) and trioctylphosphine sulfide (S-TOP) so that the molar ratio of selenium (Se) : sulfur (S) was 1.0 : 2.45.

### Example 4-4: Synthesis of shell on core surface of green fluorescent quantum dot

A quantum dot preparing method according to Example 4-4 is substantially the same as the quantum dot preparing method according to Example 4-1 in other configuration, except for only a different synthesis ratio of trioctylphosphine selenide (Se-TOP) and trioctylphosphine sulfide (S-TOP), and thus a duplicate description is omitted.

In the quantum dot preparing method according to Example 4-4, a second mixture was prepared by adding trioctylphosphine selenide (Se-TOP) and trioctylphosphine sulfide (S-TOP) so that the molar ratio of selenium (Se) : sulfur (S) was 1.5 : 1.45.

### Experimental Example 4 - Performance Evaluation

A maximum peak wavelength (PL Max), a full width at half maximum (FWHM), and quantum efficiency (QY) of the quantum dots prepared according to the preparing methods of Examples 4-1 to 4-4 were measured. Specific results were shown in Table 5 below.

**[Table 5]**

| Example | Se : S ratio | PL Max (nm) | FWHM (nm) | Quantum efficiency (%) |
|---|---|---|---|---|
| Example 4-1 | 1.0 : 1.45 | 534 | 33 | 93 |
| Example 4-2 | 1.0 : 1.96 | 529 | 35 | 96 |
| Example 4-3 | 1.0 : 2.45 | 524 | 36 | 89 |
| Example 4-4 | 1.0 : 1.45 | 536 | 34 | 87 |

The quantum dots prepared according to the preparing methods of Examples 4-1 to 4-4 have the same other configurations, except for having only a different molar ratio of trioctylphosphine selenide (Se-TOP) and trioctylphosphine sulfide (S-TOP), which are anion precursors required for the process of forming the shell on the core surface. Referring to Table 5, the quantum dots prepared according to the preparing methods of Examples 4-1 to 4-4 have different maximum peak wavelengths (PL Max) as the ratio of selenium (Se) : sulfur (S) is adjusted differently. That is, it may be confirmed that the wavelength may be controlled depending on the adding amount and molar ratio of the second anion precursor consisting of trioctylphosphine selenide (Se-TOP) and trioctylphosphine sulfide (S-TOP). Accordingly, in the quantum dots according to the preparing methods of Examples 4-1 to 4-4, even if a core wavelength range is fixed by a single core, various wavelengths may be synthesized by adjusting the ratio of selenium (Se) and sulfur (S). That is, quantum dots of various wavelength ranges may be synthesized using a single core, and conversely, quantum dots of the same wavelength range may also be synthesized using cores of various wavelength ranges, thereby minimizing a defect rate. A display device according to various embodiments of the present invention may be described as follows.

A quantum dot preparing method according to an embodiment of the present invention includes preparing a first solution containing at least one first cation precursor and a second solution containing at least one first anion precursor; mixing the first solution and the second solution at 20°C to 130°C to prepare a first mixture; raising the temperature of the first mixture to a high temperature of 300°C to 350°C within 1 minute; and cooling the first mixture, of which the temperature is raised, to 100°C or lower within 1 minute to form a core, in which the first cation precursor may include an indium oxo cluster (In-Oxocluster).

According to another feature of the present invention, the indium oxo cluster (In-Oxocluster) may be prepared by steps of mixing indium acetate and oleic acid, raising the temperature of the mixed solution to 200°C under vacuum and then converting the pressure to normal pressure, and then adding octadecene (ODE) and synthesizing at 260°C to 300°C for 1 hour or more.

According to yet another feature of the present invention, the first cation precursor may further include a zinc oxo cluster (Zn-Oxocluster).

According to yet another feature of the present invention, the zinc oxo cluster (Zn-Oxocluster) may be prepared by steps of mixing zinc acetate (Zn acetate) and oleic acid, raising the temperature of the mixed solution to 190°C under vacuum and then converting the pressure to normal pressure, and then adding octadecene (ODE) and synthesizing at 300°C to 315°C for 1 hour or more.

According to yet another feature of the present invention, the preparing of the first mixture may further include controlling a wavelength range of the quantum dot by adjusting a ratio of the indium oxo cluster (In-Oxocluster) and the zinc oxo cluster (Zn-Oxocluster).

According to yet another feature of the present invention, the first cation precursor may further include at least one of cadmium (Cd), mercury (Hg), magnesium (Mg), aluminum (Al), manganese (Mn), copper (Cu), gallium (Ga), tin (Sn), barium (Ba), iron (Fe), and strontium (Sr).

According to yet another feature of the present invention, the method may further include heat-treating the first mixture at 300°C or higher for 1 to 10 seconds between the rapidly raising of the temperature of the first mixture and the rapidly cooling of the first mixture.

According to yet another feature of the present invention, the rapidly temperature raising step and the heat-treating step may be performed by radiant heat using a quartz container and a halogen lamp.

According to yet another feature of the present invention, the method may further include mixing trioctylphosphine (TOP) with the heat-treated first mixture and additionally heat-treating the mixture at 300°C or higher for 10 seconds or longer to improve the surface reactivity of the core.

According to yet another feature of the present invention, the method may further include preparing a first sub mixture by additionally adding a first sub solution containing the first cation precursor and a second sub solution containing the first anion precursor to a solution containing the core at room temperature, raising the temperature of the first sub mixture to a high temperature of 300°C to 350°C within 1 minute, heat-treating the first sub mixture, of which the temperature is raised, for 10 seconds to 5 minutes, and cooling the heat-treated first sub mixture to 100°C or lower within 1 minute.

According to yet another feature of the present invention, the method may further include repeating the preparing of the first sub mixture, the rapidly raising of the temperature of the first sub mixture, the heat-treating of the first sub mixture, and the cooling of the first sub mixture.

According to yet another feature of the present invention, the method may further include preparing a third solution containing at least one second cation precursor and a fourth solution containing at least one second anion precursor, mixing the third solution and the fourth solution with the solution containing the core at 20°C to 100°C to prepare a second mixture, rapidly raising the temperature of the second mixture to a high temperature of 350°C to 400°C within 1 minute, and cooling the second mixture, of which the temperature is raised, to 100°C or lower within 1 minute to form a shell on the core surface.

According to yet another feature of the present invention, the third solution may contain zinc oleate (Zn-OA), and the fourth solution may contain trioctylphosphine selenide (Se-TOP) and trioctylphosphine sulfide (S-TOP).

According to yet another feature of the present invention, the method may further include controlling a wavelength range of the quantum dot by adjusting a molar ratio of zinc (Zn) to oleate (OA) of the third solution within the range of 1 : 1.3 to 1 : 1.7.

According to yet another feature of the present invention, the method may further include controlling a wavelength range of the quantum dot by adjusting a ratio of trioctylphosphine selenide (Se-TOP) and trioctylphosphine sulfide (S-TOP) in the fourth solution.

According to yet another feature of the present invention, the method may further include heat-treating the second mixture at 350°C to 370°C for 30 seconds to 5 minutes between the rapidly raising of the temperature of the second mixture and the rapidly cooling of the second mixture.

According to yet another feature of the present invention, the second cation precursor may include at least one of zinc (Zn), cadmium (Cd), mercury (Hg), indium (In), magnesium (Mg), aluminum (Al), manganese (Mn), copper (Cu), gallium (Ga), tin (Sn), barium (Ba), iron (Fe), and strontium (Sr).

According to yet another feature of the present invention, the first anion precursor and the second anion precursor may include at least one of sulfur (S), selenium (Se), phosphorus (P), tellurium (Te), arsenic (As), nitrogen (N), and antimony (Sb).

Although the embodiments of the present invention have been described in detail with reference to the accompanying drawings, the present invention is not limited thereto and may be embodied in many different forms without departing from the technical concept of the present invention. Accordingly, the various embodiments disclosed in the present invention are not intended to limit the technical spirit but describe the present invention and the technical spirit of the present invention is not limited by the following embodiments. Therefore, it should be understood that the above-described embodiments are illustrative in all aspects and do not limit the present invention. The protective scope of the present invention should be construed on the basis of the appended claims, and all the technical ideas in the equivalent scope thereof should be construed as falling within the scope of the present invention.

### [Sequence Listing Free Text]

[National research and development project supporting the invention]
[Project Unique Number] 1425157068
[Project Number] S3165227
[Ministry name] Ministry of SMEs and Startups (MSS)
[Project Management (Special) Institution Name] Korea Technology & Information Promotion Agency for SMEs
[Research Project Name] Development of Startup Growth Technologies (Special, R&D)
[Research Subject Name] Development of mass production technology for high-efficiency, eco-friendly InP quantum dots with quantum efficiency of 90%
[Percent Contribution] 1/1
[Project performance institute name] DCT Co., Ltd.
[Research Period] November 1, 2021 ~ October 31, 2023.

## Claims

1. A quantum dot preparing method comprising: preparing a first solution containing at least one first cation precursor and a second solution containing at least one first anion precursor;
preparing a first mixture by mixing the first solution and the second solution at 20°C to 130°C;
raising the temperature of the first mixture to a high temperature of 300°C to 350°C within 1 minute; and
cooling the first mixture, of which the temperature is raised, to 100°C or lower within 1 minute to form a core,
wherein the first cation precursor includes an indium oxo cluster (In-Oxocluster).

2. The quantum dot preparing method of claim 1, wherein the indium oxo cluster (In-Oxocluster) is prepared by
mixing indium acetate (In acetate) and oleic acid;
raising the temperature of the mixed solution to 200°C under vacuum and then converting the pressure to normal pressure; and
adding octadecene (ODE) and synthesizing at 260°C to 300°C for 1 hour or more.

3. The quantum dot preparing method of claim 1, wherein the first cation precursor further include a zinc oxo cluster (Zn-Oxocluster).

4. The quantum dot preparing method of claim 3, wherein the zinc oxo cluster (Zn-Oxocluster) is prepared by
mixing zinc acetate (Zn acetate) and oleic acid;
raising the temperature of the mixed solution to 190°C under vacuum and then converting the pressure to normal pressure; and
adding octadecene (ODE) and synthesizing at 300°C to 315°C for 1 hour or more.

5. The quantum dot preparing method of claim 3, wherein the preparing of the first mixture further includes controlling a wavelength range of the quantum dot by adjusting a ratio of the indium oxo cluster (In-Oxocluster) and the zinc oxo cluster (Zn-Oxocluster).

6. The quantum dot preparing method of claim 3, wherein the first cation precursor further includes at least one of cadmium (Cd), mercury (Hg), magnesium (Mg), aluminum (Al), manganese (Mn), copper (Cu), gallium (Ga), tin (Sn), barium (Ba), iron (Fe), and strontium (Sr).

7. The quantum dot preparing method of claim 1, further comprising:
heat-treating the first mixture at 300°C or higher for 1 second to 10 seconds between the rapidly raising of the temperature of the first mixture and the rapidly cooling of the first mixture.

8. The quantum dot preparing method of claim 7, wherein the rapidly temperature rising step and the heat treating step are performed by radiant heat using a quartz container and a halogen lamp.

9. The quantum dot preparing method of claim 7, further comprising:
mixing trioctylphosphine (TOP) with the heat-treated first mixture and additionally heat-treating the mixture at 300°C or higher for 10 seconds or longer to improve the surface reactivity of the core.

10. The quantum dot preparing method of claim 1, further comprising:
preparing a first sub mixture by additionally adding a first sub solution containing the first cation precursor and a second sub solution containing the first anion precursor to a solution containing the core at room temperature;
raising the temperature of the first sub mixture to a high temperature of 300°C to 350°C within 1 minute;
heat-treating the first sub mixture, of which the temperature is raised, for 10 seconds to 5 minutes; and
cooling the heat-treated first sub mixture to 100°C or lower within 1 minute.

11. The quantum dot preparing method of claim 10, further comprising:
repeating the preparing of the first sub mixture, the rapidly raising of the temperature of the first sub mixture, the heat-treating of the first sub mixture, and the cooling of the first sub mixture.

12. The quantum dot preparing method of claim 1, further comprising:
preparing a third solution containing at least one second cation precursor and a fourth solution containing at least one second anion precursor;
mixing the third solution and the fourth solution with the solution containing the core at 20°C to 100°C to prepare a second mixture;
rapidly raising the temperature of the second mixture to a high temperature of 350°C to 400°C within 1 minute; and
cooling the second mixture of which the temperature is raised to 100°C or lower within 1 minute to form a shell on the core surface.

13. The quantum dot preparing method of claim 12, wherein the third solution contains zinc oleate (Zn-OA), and
the fourth solution contains trioctylphosphine selenide (Se-TOP) and trioctylphosphine sulfide (S-TOP).

14. The quantum dot preparing method of claim 13, further comprising:
controlling a wavelength range of the quantum dot by adjusting a molar ratio of zinc (Zn) to oleate (OA) of the third solution within the range of 1 : 1.3 to 1 : 1.7.

15. The quantum dot preparing method of claim 13, further comprising:
controlling a wavelength range of the quantum dot by adjusting a ratio of trioctylphosphine selenide (Se-TOP) and trioctylphosphine sulfide (S-TOP) in the fourth solution.

16. The quantum dot preparing method of claim 12, further comprising:
heat-treating the second mixture at 350°C to 370°C for 30 seconds to 5 minutes between the rapidly raising of the temperature of the second mixture and the rapidly cooling of the second mixture.

17. The quantum dot preparing method of claim 12, wherein the second cation precursor includes at least one of zinc (Zn), cadmium (Cd), mercury (Hg), indium (In), magnesium (Mg), aluminum (Al), manganese (Mn), copper (Cu), gallium (Ga), tin (Sn), barium (Ba), iron (Fe), and strontium (Sr).

18. The quantum dot preparing method of claim 12, wherein the first anion precursor and the second anion precursor include at least one of sulfur (S), selenium (Se), phosphorus (P), tellurium (Te), arsenic (As), nitrogen (N), and antimony (Sb).
